Europäisches Patentamt

European Patent Office

Office européen des brevets

(11) Veröffentlichungsnummer: **0 506 014 A1**

## EUROPÄISCHE PATENTANMELDUNG

(21) Anmeldenummer: **92105140.5**

(22) Anmeldetag: **25.03.92**

(51) Int. Cl.⁵: **D21C 5/02**

(30) Priorität: **28.03.91 DE 4110379**

(43) Veröffentlichungstag der Anmeldung:
**30.09.92 Patentblatt 92/40**

(84) Benannte Vertragsstaaten:
**PT**

(71) Anmelder: **Kleemann, Stephan, Prof.Dr.**
**Schlederloh 15**
**W-8021 Icking(DE)**

(72) Erfinder: **Kleemann, Stephan, Prof.Dr.**
**Schlederloh 15**
**W-8021 Icking(DE)**

(74) Vertreter: **Otto, Adalbert, Dr. et al**
**Hoechst AG Werk KALLE-ALBERT Zentrale**
**Patentabteilung KA Rheingaustrasse,**
**Postfach 3540**
**W-6200 Wiesbaden(DE)**

(54) **Verfahren zur Druckfarbenentfernung aus Altpapier.**

㊄ Verfahren zur Druckfarbenentfernung aus Altpapier durch Desintegration der Altpapiermasse unter Zusatz von De-inking-Chemikalien, gegebenenfalls weitere Arbeitsschritte, die die Druckfarbenentfernung unterstützen, und Austragen der Druckfarben mittels eines geeigneten Verfahrens, dadurch gekennzeichnet, daß der gewässerten, aufzubereitenden Altpapiermasse im Verlauf des Verfahrens
a) ein oder mehrere Bleichmittel und
b) 0,1-5 Gew.-% bezogen auf die Altpapiermasse Polyvinylalkohol oder ein Copolymer des Polyvinylalkohols zugesetzt wird.

EP 0 506 014 A1

Die Erfindung betrifft ein Verfahren zur Druckfarbenentfernung aus Altpapier durch Desintegration der Altpapiermasse unter Zusatz von De-inking-Chemikalien, gegebenenfalls weitere Arbeitsschritte, die die Druckfarbenentfernung unterstützen, und Austragen der Druckfarben.

Kein Bereich der für die Papierherstellung notwendigen Roh- bzw. Halbstofferzeugung hat in den letzten Jahrzehnten eine so stürmische und anhaltende Aufwärtsentwicklung erlebt wie die Altpapieraufbereitung. Die Wiederverwertung von Altpapier, die in einigen hochentwickelten Ländern bereits knapp 50 % des gesamten Fasereintrages ausmacht, stellt, neben wirtschaftlichen Einsparungen, durch ideale Kombination des Entsorgungsproblems mit dem Prinzip der bestmöglichen Reststoffverwertung unter Berücksichtigung der Energieeinsparung einen bedeutenden Beitrag zum Umweltschutz und zur Ressourcenschonung dar.

Unter De-inking (Druckfarbenentfernung aus Altpapier) versteht man einen Altpapieraufbereitungsprozess zur Druckfarbenentfernung, der besonders auf bessere und mittlere Altpapiersorten ausgerichtet ist. De-inkte Altpapiere (Regeneratstoffe) werden z.B. bei Zeitungsdruck, Hygienekrepp, Tapetenrohpapier und Faltschachtelkarton eingesetzt, um Zellstoffe ganz oder teilweise zu ersetzen (Papiermachertaschenbuch, Dr. Curt Haefner Verlag Heidelberg, 5. Auflage, 1989, S. 104). Als Verfahren zur Druckfarbenentfernung kommt hierbei in Europa üblicherweise das Flotationsde-inking zum Einsatz, während in USA und Kanada noch überwiegend das stärker wasserverbrauchende Waschde-inking durchgeführt wird.

Einem weiteren Anstieg der Recyclingquote steht, neben Problemen mit der Erfassung von gut sortiertem Altpapier und einem Abfall in den Festigkeitswerten recyclierter Fasern, vor allem auch das Problem des Verlustes an Helligkeit trotz verbesserter De-inking-Technologie im Wege. Während sich nämlich die maschinenbauliche Seite der De-inking-Technologie durch veränderte Auflöser und Auflösebedingungen sowie weiterentwickelte Flotationszellen verbesserte, wird im chemischen Bereich der De-inking-Technologie noch immer fast unverändert die gleiche Rezeptur wie vor 10-20 Jahren verwendet.

Nach heute üblichem Verfahren werden der zu behandelnden Altpapiermasse meist bereits im Pulper die folgenden Chemikalien zugegeben: Natronlauge zur pH-Wert-Einstellung auf etwa 10-11, Wasserstoffperoxid als Löser für Druckfarben und als Bleichmittel, Wasserglas als Löser für Druckfarben und als Stabilisator für die oxidative Bleiche mit Peroxid, Seife oder Fettsäure als Schmutzsammler, Schaumbildner und Flotationsmittel, sowie in einigen Fällen auch noch organische Komplexbildner zur Peroxidstabilisierung. Die Gesamtmenge an Chemikalien beträgt 4 - 8 Gew.-%, bezogen auf atro Stoff (Papiermachertaschenbuch, Dr. Curt Haefner Verlag Heidelberg, 5. Auflage, 1989, S. 104).

Die nach diesem Verfahren erzielbaren Helligkeitswerte sind für manche Anwendungsgebiete noch ungenügend. Zudem erhöhen sich durch den Einsatz neuartiger Tinten und Druckfarbstoffe die Anforderungen an den De-inking- Prozeß.

Aus der GB-PS 1 025 783 ist bekannt, daß gewisse Verbindungen die Eigenschaft haben, Schmutz aufzuschlemmen, welcher sich von den Fasern durch die Wirkung eines oberflächenaktiven Mittels abgesetzt hat. In einem Waschprozeß verhindern diese Verbindungen die Wiederablagerung des Schmutzes an den Fasern, so daß er durch Spülen mit Wasser entfernbar ist. Diese Verbindungen sind bekannt als Schutzkolloide oder Schmutzaufschlemmlösungen. Ihre Grundwirkung ist ziemlich verschieden von derjenigen der oberflächenaktiven Mittel, welche in erster Linie durch Verminderung der Oberflächenspannung der Flüssigkeit, in welcher sie gelöst sind, wirken. Obgleich Schutzkolloide oder schmutzaufschlemmende Mittel gleichfalls die Eigenschaft aufweisen können, die Oberflächenspannung bis zu einem gewissen Grade zu vermindern, ist dies jedoch nicht in erster Linie für ihr erfolgreiches Wirken erforderlich.

Als Beispiel für diese Art von Verbindungen ist Polyvinylalkohol genannt. Nach dem in obiger Druckschrift beschriebenen Verfahren zum Entfärben von Altpapier werden jedoch gute Helligkeitswerte nur erreicht, wenn in Verbindung mit dem Schmutzaufschlemmittel ein organisches Lösungsmittel, wie z.B. Trichlorethylen, eingesetzt wird.

Aufgabe der vorliegenden Erfindung war es, ein Verfahren zu entwickeln, welches bei möglichst weitgehender Unbedenklichkeit für das Ökosystem zu einer deutlichen Steigerung des erzielbaren Weißgrades bei der Druckfarbenentfernung aus Altpapier führt.

Überraschenderweise wurde nun gefunden, daß durch kombinierten Einsatz von Bleichmitteln und Polyvinylalkohol oder einem Copolymer des Polyvinylalkohols im De-inking-Verfahren ein deutlicher Helligkeitsgewinn bei der aufbereiteten Altpapiermasse zu erzielen ist. Weiterhin wurde gefunden, daß Polyvinylalkohole mit einem mittleren Molgewicht ($\overline{M}_w$) von 200 000 und einem Solvolysegrad des zugrundeliegenden Vinylesters von 95 Mol.-% und solche mit einem mittleren Molgewicht ($\overline{M}_w$) von 50 000 und einem Solvolysegrad des zugrundeliegenden Vinylesters von 70 - 95 Mol.-% einen besonders großen Helligkeitsgewinn bewirken, und daß der Zusatz von Polyvinylalkohol in einem Mengenbereich von 0,4 - 1,5 Gew.-%, bezogen auf die Altpapiermasse, besonders günstige Ergebnisse liefert.

Gegenstand der Erfindung ist ein Verfahren zur Druckfarbenentfernung aus Altpapier durch Desintegration der Altpapiermasse unter Zusatz von De-inking-Chemikalien, gegebenenfalls weitere Arbeitsschritte, die die Druckfarbenentfernung unterstützen, und Austragen der Druckfarben mittels eines geeigneten Verfahrens, dadurch gekennzeichnet, daß der gewässerten, aufzubereitenden Altpapiermasse im Verlauf des Verfahrens

a) ein oder mehrere Bleichmittel und

b) 0,1-5 Gew.-%, bezogen auf die Altpapiermasse, Polyvinylalkohol oder eines Copolymers des Polyvinylalkohols zugesetzt wird.

Die nach dem erfindungsgemäßen Verfahren aufbereitete Altpapiermasse zeichnet sich durch besonders hohe Helligkeitswerte aus. Das Verfahren arbeitet besonders umweltfreundlich, da auf organische Lösungsmittel verzichtet werden kann und außerdem mit Polyvinylalkohol eine Substanz eingesetzt wird, die bekanntlich biologisch gut abbaubar und toxikologisch in hohem Grade unbedenklich ist.

Die einzelnen Schritte des erfindungsgemäßen Verfahrens sind an sich auf dem Gebiet der De-inking-Technologie bekannt und lassen sich in weiten Bereichen variieren. Als erstes erfolgt die Desintegration der Altpapiermasse im Pulper, wobei kontinuierlich oder diskontinuierlich gearbeitet werden kann. Auf dieser Stufe wird bevorzugt im alkalischen Milieu gearbeitet, es kann aber auch im neutralen pH-Bereich gearbeitet werden. Es kommen bevorzugt Nieder- oder Hochkonsistenz-Pulper oder Trommelpulper zum Einsatz. Je nach Art und Herkunft der Altpapiermasse und dem beabsichtigten Verwendungszweck nach der Aufbereitung schließen sich an die Desintegration und/oder das Austragen der Druckfarben gegebenenfalls weitere Arbeitsschritte, wie z.B. Einwirkung der De-inking-Chemikalien über längere Zeit und/oder bei höherer Temperatur, Kneten, Bleichen oder Zerfaserung an. Das Austragen der Druckfarben erfolgt bevorzugt durch Flotation, Waschen, mechanische Verfahren, wie z.B. cleaning, screening, cleaning-screening, reverse cleaning, two-stages-forward cleaning, two-stages reverse cleaning und forward reverse cleaning, oder gegebenenfalls durch eine mögliche Kombination dieser Verfahren. Die einzelnen Arbeitsschritte werden gegebenenfalls bei erhöhter Temperatur durchgeführt.

Als Bleichmittel im Sinne des erfindungsgemäßen Verfahrens können oxidativ oder reduktiv wirksame Substanzen zur Anwendung kommen. Oxidationsmittel und Reduktionsmittel werden jeweils einzeln oder gegebenenfalls - in unterschiedlichen Verfahrensschritten - nacheinander eingesetzt. Bevorzugt sind Varianten des erfindungsgemäßen Verfahrens , bei denen ein oder mehrere oxidative Bleichvorgänge durchgeführt werden, und solche, bei denen erst ein oder mehrere oxidative Bleichvorgänge und dann ein oder mehrere reduktive Bleichvorgänge durchgeführt werden. Bevorzugte Oxidationsmittel sind z.B. Verbindungen, die eine Peroxogruppe enthalten, im Rahmen dieser Erfindung stets als Peroxide bezeichnet, und Hypochlorite. Besonders bevorzugt ist die Verwendung von Wasserstoffperoxid, Natriumperoxid und Peroxoessigsäure, bzw. von deren Salzen.

Die Zugabe von Peroxid erfolgt bevorzugt bereits im Pulper, ebenfalls bevorzugt ist die Zugabe eines Teils der Gesamtmenge an Wasserstoffperoxid bereits im Pulper und Zugabe der restlichen Menge in einem späteren Verfahrensschritt. Die Zugabe von Peroxid erfolgt bevorzugt bei einem pH-Wert von 10-12, besonders bevorzugt von 10,5-11. Das Peroxid wird bevorzugt in Gegenwart peroxid-stabilisierender Verbindungen, wie z.B. von Wasserglas oder von organischen Chelatbildnern, eingesetzt.

Als Reduktionsmittel werden z.B. Dithionite (Hydrosulfit), Disulfite, Formamidinsulfinsäure und Thiosulfat eingesetzt. Die zugesetzten Mengen betragen bevorzugt 0,1-5 Gew.-%, besonders bevorzugt zwischen 0,5 und 1,5 Gew.-%, jeweils bezogen auf die trockene Altpapiermasse.

Als Polyvinylalkohole werden im Rahmen dieser Erfindung Solvolyseprodukte von Polyvinylestern, wie z.B. Polyvinylacetat und Polyvinylpropionat, bezeichnet, die einen Solvolysegrad von mindestens 70 Mol-%, bezogen auf Vinylester-Einheiten, aufweisen.

Die erfindungsgemäß eingesetzten Polyvinylalkohole und deren Copolymere haben bevorzugt ein mittleres Molekulargewicht ($\overline{M}_w$) von 10 000 - 250 000 und einen bevorzugten Solvolysegrad von 70 - 100 Mol.-%, bezogen auf Vinylester-Einheiten. Ihre Viskosität nach DIN 53 015 (4%ige wäßrige Lösung, 20 °C) liegt bevorzugt zwischen 1 und 70 mPa.s ($\overline{M}_w$). Ganz besonders bevorzugt sind Polyvinylalkohole mit einem mittleren Molgewicht ($\overline{M}_w$) von 200 000 und einem Solvolysegrad von 95 Mol-%, bezogen auf Vinylester-Einheiten, und solche, mit einem mittleren Molgewicht ($\overline{M}_w$) von < 50 000 und einem Solvolysegrad von 65 - 95 Mol-%, bezogen auf Vinylester-Einheiten.

Copolymere des Polyvinylalkohols im Sinne der Erfindung sind alle Formen von Polymeren, bei denen im Endprodukt neben Elementen der Struktur -$CH_2$-CH(OH)- auch andere Polymerstrukturen wie beispielsweise -$CH_2$-CH(O-C(O)-)-aufzufinden sind. Bevorzugte Comonomere zur Copolymerisation sind beispielsweise (Meth)acrylsäureester bzw. deren Hydrolyseprodukte sowie Ethylen und Butadien. Im erfindungsgemäßen Verfahren bevorzugt einsetzbare Copolymere des PVAls finden sich bei K. Noro: Preparation of Modified Polyvinyl Alcohols from Copolymers in: Polyvinylalcohol (Ed. C.A. Finch), Wiley, New York 1973, S. 147-166.

Darüberhinaus können die Hydroxylgruppen des entstandenen Polyols auch mit epoxydhaltigen Verbindungen, wie beispielsweise Ethylenoxid oder Propylenoxid, zur Reaktion gebracht worden sein. Auf diese Weise können beispielsweise auch kationische und anionische Gruppierungen, vorzugsweise Carboxylgruppen, in das Polymer eingeführt worden sein.

Die erfindungsgemäß verwendeten Polyvinylalkohole und deren Copolymere werden bevorzugt in Mengen von 0,1 - 5 Gew.-% (besonders bevorzugt von 0,4 - 1,5 Gew.-%), bezogen auf die trockene Altpapiermasse eingesetzt. In einer bevorzugten Variante des erfindungsgemäßen Verfahrens wird der Polyvinylalkohol oder sein Copolymer der Altpapiermasse bereits im Pulper zugesetzt, nach einer anderen, ebenfalls bevorzugten Variante erst in der Flotationszelle.

Neben den erfindungsgemäßen Komponenten Bleichmittel und Polyvinylalkohol oder dessen Copolymeren werden der aufzuarbeitenden Altpapiermasse üblicherweise weitere, die Druckfarbenentfernung unterstützende Verbindungen zugesetzt.

Solche gegebenenfalls zugesetzte Verbindungen sind zum Beispiel

1. Basen, wie z.B. Natriumhydroxid, Kaliumhydroxid, Natriumcarbonat und Kaliumcarbonat,

2. Wasserglas

3. Chelatbildner, wie z.B. Diethylentriaminpentaessigsäure (DTPA) und deren Salze, Diethylentriaminpentamethylenphosphonsäure (DTPA) und deren Salze oder Ethylendiamintetraessigsäure (EDTA) und deren Salze,

4. anionische und nichtionische Detergentien, wie z.B. Polyglykolether von Fettalkoholen und Aralkanolen, Fettsäuren und deren Salze, wie z.B. Ölsäure, sowie Alkylsulfonsäuren, alkylsubstituierte Arylsulfonsäuren und deren Salze, wie z.B. Dodecylbenzolsulfonat.

Mit dem erfindungsgemäßen Verfahren können alle Arten von Altpapier und Pappe, die gewöhnlich dem Recycling zugeführt werden, aufgearbeitet werden, bevorzugt ist der Einsatz von Zeitungs- und Illustriertenpapier. Ebenso können mit Tintenstrahl- oder Laserdruck bedruckte Papiere, gefärbte Papiere und folien- oder kunststoffbeschichtete Papiere und Pappen eingesetzt werden. Üblicherweise in Recycling-Verfahren verwendete Papiersorten finden sich z.B. im Verzeichnis des Verbands Deutscher Papierfabriken e.V. und im Zirkular PS-86 des Paper Stock Institute of America.

Das erfindungsgemäß aufbereitete Altpapier dient als Rohstoff zur Papierherstellung. Es kann z.B. vorteilhaft zur Produktion von Druck- und Schreibpapieren, von Papieren für den Haushalt und den Hygienebereich und von Tapetenrohpapier eingesetzt werden. Durch die Zugabe von Polyvinylalkohol bei der Aufbereitung des Altpapiers erreicht man außerdem auch höhere Festigkeiten im Endprodukt.

## Beispiele

(Alle Prozentangaben in den Beispielen, die mit Chemikalien in Zusammenhang stehen, sind Gewichtsprozente und beziehen sich auf die Trockenmasse des Altpapiers)

## Allgemeine Arbeitsvorschrift

Die Durchführung der De-inking-Versuche erfolgte in Anlehnung an die Standardmethode der Papiertechnischen Stiftung, München.

Die Papierprobe wurde in ca. 2x2 cm große Stücke zerrissen und anschließend 50 g atro abgewogen. Die Stoffzusammensetzung lautete: 60 Gew.-% Zeitungsdruck (Süddeutsche Zeitung) + 40 Gew.-% Illustrierte (Der Spiegel).

Zur Chemikaliendosierung wurden 1500 ml Wasser von 20 °dH in der folgenden Reihenfolge mit folgenden Chemikalien als Standardrezeptur versetzt: 3 % Wasserglas, 0-5 % Polyvinylalkohol, 1 % Ölsäure, 1 % NaOH und 1 % Wasserstoffperoxid (als wäßrige Lösung). Die gesamte Lösung wurde auf 40 °C erwärmt und anschließend zusammen mit den 50 g Papier in den Desintegrator überführt, wo bei 3000 U/Min. für die Dauer von 10 Minuten aufgeschlagen wurde.

Der aus dem Desintegrator entnommene Stoff wurde dann für 90 Minuten bei 40 °C belassen.

Zur Flotation wurde der Stoff nach Ablauf der Reaktionszeit auf 0,8 % Stoffdichte verdünnt und in die Flotationszelle überführt. Dann wurde für 10 Minuten bei einem Luftdruck von 1 bar und einer Rührerdrehzahl von 1200 U/Min. flotiert, wobei der aufgestiegene Schaum stets per Hand mit einem Schaber abgeschöpft wurde. Die abgeschöpfte Menge wurde während der Flotation durch Verdünnungswasser ständig ergänzt.

Nach der Flotation wurden von der in der Flotationszelle verbliebenen Suspension ca. 1000 ml entnommen und mit 10 %iger Schwefelsäure auf pH 5 eingestellt. Die anschließende Blattbildung erfolgte auf einem Blattbildner nach Rapid Köthen.

Die Bestimmung der Weißgrade erfolgte nach der Standard-TAPPI Methode als Reflexionswert bei 457 nm bezogen auf Bariumsulfat als 100 % unter Benutzung eines "Elrepho 2000" Gerätes der Firma Datacolor. Es wurden stets die Mittelwerte aus 3 Messungen gebildet.

Die Angabe der Weißgrade erfolgt nach der Standard-TAPPI Methode als Reflexionswert bei 457 nm bezogen auf Bariumsulfat als 100 %.

Die Blindprobe, ohne Zusatz jeglicher Chemikalien, ergab einen mittleren Weißgrad von 50,3 %, die oben angegebene Standardrezeptur, ohne Polyvinylalkohol ergab einen mittleren Weißgrad von 58,3 - 58,7 %.

**Beispiel 1 - 9:** Entsprechend der allgemeinen Arbeitsvorschrift mit Zugabe von [R] Mowiol 66 -100 (Hoechst AG, $\overline{M}_w$ 200 000, Solvolysegrad 99,4 ± 0,6)

| Beispiel | 1 | 2 | 3 | 4 | 5 | 6 | 7 | 8 | 9 |
|---|---|---|---|---|---|---|---|---|---|
| % PVAL | 0,2 | 0,4 | 0,6 | 0,8 | 1,0 | 1,2 | 1,4 | 3,0 | 5,0 |
| R 457 | 53,6 | 55,2 | 56,6 | 58,6 | 62,4 | 62,3 | 62,3 | 58,8 | 55,7 |

**Beispiel 10 - 16:** Entsprechend der allgemeinen Arbeitsvorschrift mit Zugabe von [R] Mowiol 56 -98 (Hoechst AG, $\overline{M}_w$ 195 000, Solvolysegrad 98,4 ± 0,4)

| Beispiel | 10 | 11 | 12 | 13 | 14 | 15 | 16 |
|---|---|---|---|---|---|---|---|
| % PVAL | 0,2 | 0,4 | 0,6 | 0,8 | 1,0 | 1,2 | 1,4 |
| R 457 | 57,0 | 58,6 | 60,8 | 60,7 | 61,6 | 60,8 | 60,9 |

**Beispiel 17 - 22:** Entsprechend der allgemeinen Arbeitsvorschrift mit Zugabe von [R] Mowiol 10 -98 (Hoechst AG, $\overline{M}_w$ 61 000, Solvolysegrad 98,4 ± 0,4)

| Beispiel | 17 | 18 | 19 | 20 | 21 | 22 |
|---|---|---|---|---|---|---|
| % PVAL | 0,2 | 0,4 | 0,6 | 0,8 | 1,0 | 1,2 |
| R 457 | 53,6 | 54,4 | 56,6 | 58,5 | 61,4 | 61,1 |

**Beispiel 23-29:** Entsprechend der allgemeinen Arbeitsvorschrift mit Zugabe von [R] Mowiol 4-88 (Hoechst AG, $\overline{M}_w$ 31 000, Solvolysegrad 87 7 ± 1,0)

| Beispiel | 23 | 24 | 25 | 26 | 27 | 28 | 29 |
|---|---|---|---|---|---|---|---|
| % PVAL | 0,2 | 0,4 | 0,6 | 0,8 | 1,0 | 1,2 | 1,4 |
| R 457 | 58,4 | 59,8 | 60,4 | 60,7 | 61,5 | 62,4 | 62,2 |

**Beispiel 30-35:** Entsprechend der allgemeinen Arbeitsvorschrift mit Zugabe von [R] Mowiol 18 -88 (Hoechst AG, $\overline{M}_w$ 130 000, Solvolysegrad 87,7 ± 1,0)

| Beispiel | 30 | 31 | 32 | 33 | 34 | 35 |
|---|---|---|---|---|---|---|
| % PVAL | 0,2 | 0,4 | 0,6 | 0,8 | 1,0 | 1,2 |
| R 457 | 59,8 | 60,9 | 59 | 58,1 | 56,1 | 55,9 |

**Beispiel 36-41:** abweichend von der allgemeinen Arbeitsvorschrift erfolgt die Zugabe von Polyvinylalkohol [R] Mowiol 66-100 (Hoechst AG, $\overline{M}_w$ 200 000, Solvolysegrad 99,4 ± 0,6) erst in der Flotationszelle

| Beispiel | 36 | 37 | 38 | 39 | 40 | 41 |
|---|---|---|---|---|---|---|
| % PVA | 0,2 | 0,4 | 0,6 | 0,8 | 1,0 | 1,2 |
| R 457 | 58,9 | 59,4 | 60,0 | 59,7 | 60,9 | 60,2 |

Aus den Versuchsreihen ist klar zu erkennen, daß ein optimaler Zusatz von Polyvinylalkohol einen Weißgradgewinn von mehreren Punkten bewirken kann. Bei Überdosierung kommt es wieder zu einem Abfall des Weißgrades.

Weiterhin ist zu erkennen, daß mit hochmolekularen, hochverseiften und niedermolekularen, teilverseiften Polyvinylalkoholsorten die besten Ergebnisse erzielt werden.

Es ist auch zu erkennen, daß die gefundene positive Wirkung der Polyvinylalkohole sowohl bei Zugabe im Pulper als auch bei Zugabe in der Flotationszelle gefunden wird.

Bei den nach Beispiel 1 bis 5 erhaltenen Papieren wurden die Festigkeitswerte bestimmt, desgleichen bei einem Papier, das ohne Zusatz von Polyvinylalkohol aufbereitet worden war. Die in der folgenden Tabelle zusammengestellten Ergebnisse zeigen, daß der Zusatz von Polyvinylalkohol auch die Festigkeitswerte positiv beeinflußt.

| Bruchwiderstand (in Newton): | | | | | | |
|---|---|---|---|---|---|---|
| zu Beispiel | | 1 | 2 | 3 | 4 | 5 |
| % PVAL | 0 | 0,2 | 0,4 | 0,6 | 0,8 | 1,0 |
| N | 32 | 32,5 | 33 | 33,8 | 34,1 | 35 |

| Reißlänge (in Meter): | | | | | | |
|---|---|---|---|---|---|---|
| zu Beispiel | | 1 | 2 | 3 | 4 | 5 |
| % PVAL | 0 | 0,2 | 0,4 | 0,6 | 0,8 | 1,0 |
| m | 2720 | 2763 | 2805 | 2873 | 2899 | 2975 |

| Berstdruck (in kPa): | | | | | | |
|---|---|---|---|---|---|---|
| zu Beispiel | | 1 | 2 | 3 | 4 | 5 |
| % PVAL | 0 | 0,2 | 0,4 | 0,6 | 0,8 | 1,0 |
| kPa | 24,4 | 24,8 | 25,8 | 27,3 | 28 | 28,3 |

EP 0 506 014 A1

| Weiterreißarbeit (in mN*m/m): | | | | | | |
|---|---|---|---|---|---|---|
| zu Beispiel | | 1 | 2 | 3 | 4 | 5 |
| % PVAL | 0 | 0,2 | 0,4 | 0,6 | 0,8 | 1,0 |
| mN*m/m | 954 | 960 | 975 | 985 | 987 | 995 |

**Patentansprüche**

1. Verfahren zur Druckfarbenentfernung aus Altpapier durch Desintegration der Altpapiermasse unter Zusatz von De-inking-Chemikalien, gegebenenfalls weitere Arbeitsschritte, die die Druckfarbenentfernung unterstützen, und Austragen der Druckfarben, dadurch gekennzeichnet, daß der gewässerten, aufzubereitenden Altpapiermasse im Verlauf des Verfahrens
   a) ein oder mehrere Bleichmittel und
   b) 0,1-5 Gew.-%, bezogen auf die Altpapiermasse, Polyvinylalkohol oder ein Copolymer des Polyvinylalkohols zugesetzt wird.

2. Verfahren nach Anspruch 1, dadurch gekennzeichnet, daß das Austragen der Druckfarben durch Flotation erfolgt.

3. Verfahren nach Anspruch 1 oder 2, dadurch gekennzeichnet, daß Polyvinylalkohol in Mengen von 0,4 - 1,5 Gew.-%, bezogen auf die Altpapiermasse, zugesetzt wird.

4. Verfahren nach einem oder mehreren der vorhergehenden Ansprüche, dadurch gekennzeichnet, daß Polyvinylalkohol mit einem mittleren Molekulargewicht ($M_w$) oberhalb von 200 000 und einem Solvolysegrad des zugrundeliegenden Esters von 95-100 Mol.-% oder mit einem mittleren Molekulargewicht ($M_w$) unterhalb von 50 000 und einem Solvolysegrad des zugrundeliegenden Esters von 70-95 Mol.-% eingesetzt wird.

5. Verfahren nach einem oder mehreren der vorhergehenden Ansprüche, dadurch gekennzeichnet, daß als Bleichmittel Peroxide verwendet werden.

6. Verfahren nach Anspruch 5, dadurch gekennzeichnet, daß als Peroxid Wasserstoffperoxid, Natriumperoxid, Peroxyessigsäure oder deren Salze verwendet werden.

7. Verfahren nach einem oder mehreren der vorhergehenden Ansprüche, dadurch gekennzeichnet, daß der gewässerten, aufzubereitenden Altpapiermasse ein oder mehrere Detergentien zugesetzt werden.

8. Verfahren nach Anspruch 7, dadurch gekennzeichnet, daß als Detergens Ölsäure eingesetzt wird.

9. Verfahren nach einem oder mehreren der vorhergehenden Ansprüche, dadurch gekennzeichnet, daß der gewässerten, aufzubereitenden Altpapiermasse ein oder mehrere Komplexbildner zugesetzt werden.

10. Verfahren nach Anspruch 9, dadurch gekennzeichnet, daß als Komplexbildner Wasserglas, Diethylentriaminpentaessigsäure (DTPA) und deren Salze, Diethylentriaminpentamethylenphosphorsäure (DTPA) und deren Salze oder Ethylendiamintetraessigsäure (EDTA) oder deren Salze verwendet werden.

11. Verfahren nach Anspruch 10, dadurch gekennzeichnet, daß es bei einem pH-Wert von 10-12 durchgeführt wird.

12. Verwendung von Altpapiermassen, die in einem Verfahren nach Anspruch 1-11 aufbereitet wurden, zur Herstellung von Recycling-Papieren.

13. Mittel zur Unterstützung der Druckfarbenentfernung aus Altpapier, enthaltend
    a) ein oder mehrere Bleichmittel und
    b) Polyvinylalkohol oder ein Copolymer von Polyvinylalkohol.

7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | WO-A-8 001 085 (UNIVERSITY OF SURREY)<br><br>* Seite 5, Zeile 33 - Zeile 35 *<br>* Seite 18, Zeile 35 - Seite 19, Zeile 9; Anspruch 8 *<br>--- | 1-3,5-7, 12,13 | D21C5/02 |
| D,Y | DE-A-1 517 225 (HUGH STEVENSON & SONS)<br><br>* Anspruch 3 *<br>--- | 1-3,12, 13 | |
| Y | EP-A-0 394 690 (HART CHEMICAL LTD.)<br><br>* Seite 5, Zeile 13 - Zeile 18 *<br>* Seite 9, Zeile 48 - Seite 10, Zeile 16 * | 1-3,12, 13 | |
| A | | 5-7,9,10 | |
| | ----- | | **RECHERCHIERTE SACHGEBIETE (Int. Cl.5)**<br><br>D21C |

Der vorliegende Recherchenbericht wurde für alle Patentansprüche erstellt

| Recherchenort | Abschlußdatum der Recherche | Prüfer |
|---|---|---|
| DEN HAAG | 29 JUNI 1992 | BERNARDO NORIEGA F. |